# FASCICULE DE BREVET EUROPEEN

(11) **EP 3 571 350 B1**
(45) Date de publication et mention de la délivrance du brevet: **21.08.2024**
(21) Numéro de dépôt: 18704270.0
(22) Date de dépôt: 16.01.2018
(51) Int. Cl.: E01B 35/00, G01M 5/00, G01M 7/00, G01N 29/04, G01N 29/44, G01N 29/46

(54) **PROCÉDÉ ET INSTALLATION DE DÉTECTION DE L'ENDOMMAGEMENT D'UN BLOCHET**
VERFAHREN UND EINRICHTUNG ZUR ERKENNUNG VON SCHÄDEN AN EINER SCHWELLE
METHOD AND FACILITY FOR DETECTING DAMAGE TO A SLEEPER

(30) Priorité: 19.01.2017 FR 1750421
(43) Date de publication de la demande: 27.11.2019
(73) Titulaire: France-Manche, 75008 Paris (FR); Ecole Nationale des Ponts et Chaussées, 77455 Marne La Vallée Cedex 2 (FR)
(72) Inventeur: BOUDON, Clotilde, 75014 Paris (FR); SABATIER, Francis, 62100 Calais (FR); DUHAMEL, Denis, 94300 Vincennes (FR); FORET, Gilles, 77600 Conches-sur-Gondoire (FR); HOANG, Tien, 93160 Noisy-le-Grand (FR)
(74) Mandataire: Cabinet Beau de Loménie
(86) Numéro de dépôt international: PCT/FR2018/050092
(87) Numéro de publication internationale: WO 2018/134506

(56) Documents cités:
- EP-A2- 1 533 421
- CN-A- 101 813 666
- JP-A- H1 026 576

## Description

### Arrière-plan de l'invention

La présente invention concerne le domaine de la maintenance de voies ferrées, telle que par exemple, mais pas exclusivement, les voies ferrées non-ballastées. Dans ce type de voie ferrée, le ballast est remplacé par une dalle de béton non armé dans laquelle sont encastrés des systèmes de fixation auxquels sont fixés les rails. Alors que les voies ferrées ballastées sont généralement équipées de traverses monoblocs qui relient les deux rails, les voies ferrées non-ballastées sont le plus souvent munies de systèmes de fixation indépendants, éventuellement reliés par une entretoise métallique.

Actuellement, les tunnels ferroviaires, les ponts et certaines lignes à grande vitesse sont équipés de telles voies ferrées non-ballastées.

Parmi ces systèmes de fixation, on connaît notamment le système de fixation LVT (marque déposée) conçu par la société Sonneville.

Ce type de système de fixation comporte généralement un support de rail, se présentant sous la forme d'un bloc généralement appelé « blochet ». Le blochet est donc un bloc support auquel est fixé le rail. Le blochet est traditionnellement constitué de béton, généralement de béton armé. Le blochet est logé dans un chausson en caoutchouc qui est noyé dans une dalle de béton non armé disposée sous la voie ferrée, grâce à quoi le blochet est découplé de la dalle.

Ce type de voie ferrée subit un vieillissement dû aux passages répétés des trains. Il en résulte une dégradation progressive des systèmes de fixation et en particulier des blochets. Cette dégradation est plus ou moins rapide selon la densité du trafic ferroviaire.

Il a été constaté que les blochets subissent des contraintes mécaniques suivant les quatre mouvements principaux du rail : les déplacements vertical et transversal et les rotations selon deux axes horizontaux. Ces mouvements génèrent des zones de concentration de contrainte dans chaque composant du système de fixation qui sont responsables d'endommagements. Par ailleurs, la surveillance de la dégradation des composants du système de fixation s'avère difficile dans la mesure où le système de fixation est inséré dans la dalle de béton.

Le blochet est un des composants les plus importants du système de fixation. Lorsqu'il est endommagé, le système de fixation ne supporte plus correctement le rail. Par conséquent, la durée de vie du blochet représente aussi la durée de vie du système de fixation.

L'invention concerne plus précisément la détection de l'endommagement des blochets, notamment pour les voies ferrées non-ballastées.

Comme le blochet est inséré dans le chausson, qui est lui-même inséré dans la dalle sous-jacente, les fissures qui apparaissent à l'intérieur ou sur les surfaces inférieure et latérales du blochet ne sont pas facilement détectables de l'extérieur lors des opérations d'inspection de la voie.

En outre, le retrait systématique des systèmes de fixation est difficilement envisageable car il nécessiterait de démonter le rail et d'extraire les systèmes de fixation hors de la dalle, ce qui demanderait un temps considérable pour une efficacité réduite. Qui plus est, lorsqu'on enlève le système de fixation de sa cavité dans la dalle, sa remise en place peut s'avérer complexe.

EP1533421 décrit un procédé de détection de défaut dans un blochet nécessitant une analyse visuelle et un nettoyage préalable. JP410026576 décrit un procédé de détection de l'endommagement d'un ballast utilisant un excitateur fixé au ballast et mesurant une réponse fréquentielle.

### Objet et résumé de l'invention

Un but de la présente invention est de proposer un procédé de détection de l'endommagement d'un blochet d'une voie ferrée qui permet de surveiller simplement et rapidement les supports de rail.

Pour ce faire, l'invention porte sur un procédé de détection de l'endommagement d'un blochet d'une voie ferrée selon la revendication 1, procédé dans lequel :
- on excite le blochet ; puis
- on mesure la réponse vibratoire du blochet ;
- on détermine au moins une première fréquence propre d'un premier mode propre du blochet à partir de la réponse vibratoire mesurée;
- on détermine au moins un niveau d'endommagement du blochet à partir d'au moins ladite première fréquence propre.

On comprend donc que le procédé de détection selon l'invention est non-destructif, c'est-à-dire qu'il permet d'évaluer un niveau
d'endommagement sans avoir à casser le blochet pour rechercher la présence de fissures internes.

Un autre intérêt du procédé de détection selon l'invention est qu'il peut être mis en oeuvre simplement et rapidement dès lors qu'il ne nécessite pas de démonter le rail ou d'extraire les blochets hors de la dalle de béton sous-jacente de la voie. L'invention permet ainsi de réaliser les opérations de maintenance sur les voies ferrées de façon plus efficace et moins coûteuse.

Encore un autre intérêt de l'invention est que le procédé de détection selon l'invention peut être automatisé, comme il sera détaillé ci-dessous, ce qui permet d'intervenir facilement dans des sites confinés ou difficilement accessibles par un opérateur, comme par exemple les enceintes ferroviaires souterraines.

De façon particulièrement avantageuse, le procédé de détection selon l'invention pourra être utilisé dans le cadre de la maintenance de tunnels ferroviaires, en particulier les tunnels de grandes longueurs, qu'ils soient terrestres ou sous-marins. L'invention trouvera également son application dans la détection d'endommagement de blochets en béton armé, tels que par exemple les blochets du système LVT (marque déposée) de la société Sonneville AG, ou équivalents.

Le procédé de détection est avantageusement mis en oeuvre sur une voie ferrée qui comporte un premier rail et un second rail, le premier rail étant disposé, en particulier fixé, sur des premiers blochets, tandis que le second rail est disposé, en particulier fixé, sur des deuxièmes blochets indépendants des premiers blochets selon une direction transversale au premier rail. Le plus souvent, les deuxièmes blochets sont distincts et distants des premiers blochets. Certains des premiers blochets peuvent toutefois être reliés aux deuxièmes blochets par des entretoises métalliques. Ce type de montage est traditionnellement dénommé « traverse bi-bloc ».

Le procédé de détection selon l'invention est préférentiellement, mais non nécessairement, mis en oeuvre alors que le blochet est fixé au rail, c'est-à-dire que la détection d'endommagement est réalisée en voie. Le procédé selon l'invention peut également être mis en oeuvre alors que le rail n'est pas fixé au blochet. Avantageusement, mais non exclusivement, le procédé de détection est mis en oeuvre sur une voie ferrée non-ballastée.

Au sens de la présente invention, on entend par premier mode propre (également appelé mode normal), l'un des modes propres de vibration du blochet. De préférence, mais non exclusivement, il s'agit du mode propre dont la fréquence propre est la plus basse. Sans sortir du cadre de la présente invention, il pourrait toutefois s'agir d'un autre mode propre. De préférence, la première fréquence propre est supérieure à 100 Hz, de préférence supérieure à 200 Hz. Dans le cas de blochets de remplacement, c'est-à-dire les blochets qui ont été posés en remplacement des blochets d'origine, la première fréquence propre est supérieure à 300 Hz.

De préférence, la réponse vibratoire est mesurée par un capteur de vibrations, par exemple un accéléromètre ou un vibromètre, avant d'être transformée en fonction de réponse en fréquence (FRF) par une technique mathématique du type transformée de Fourier, connue par ailleurs. La première fréquence propre du premier mode propre est avantageusement déterminée à partir de la fonction de réponse en fréquence, de préférence à l'aide d'un calculateur.

De préférence, les pics dont la fréquence est inférieure à une valeur seuil, par exemple 100 Hz ou 200 Hz, sont filtrés, c'est-à-dire qu'ils ne sont pas pris en considération. Dans le cas de blochets de remplacement, la valeur seuil choisie est de l'ordre de 300 Hz. Pour ce faire, on détermine la plus petite fréquence propre supérieure aux fréquences filtrées.

Par ailleurs, dans le cas où le blochet analysé n'est pas fixé au rail, il ne sera pas nécessaire de procéder à cette étape de filtrage.

Eventuellement, plusieurs excitations successives pourront être réalisées, par exemple en excitant différentes zones du blochet, afin de s'assurer d'obtenir la première fréquence propre correspondant au premier mode propre. Selon une autre variante, l'excitation pourra être réalisée sur le rail fixé au blochet ou sur une face latérale.

Toutefois, et de façon préférentielle, on réalise une unique excitation en agissant sur une partie d'extrémité du blochet, de préférence sur sa face supérieure. Encore de préférence, l'unique excitation consiste à réaliser une percussion ou impact localisée en une zone d'extrémité longitudinale du blochet.

La mesure de réponse vibratoire est préférentiellement réalisée à distance de la zone d'impact. A titre d'exemple non limitatif, la zone de mesure et la zone d'impact sont situées en deux parties d'extrémités opposées de la face supérieure du blochet, encore de préférence en deux extrémité d'une diagonale de la face supérieure du blochet.

Le niveau d'endommagement est ensuite caractérisé à partir de la première fréquence propre qui a été déterminée à partir de la réponse vibratoire mesurée.

En fonction de la valeur de la première fréquence propre, le procédé évaluera un niveau d'endommagement, par exemple faible ou fort.

Selon l'invention, pour détecter le niveau d'endommagement du blochet, on compare la première fréquence propre avec au moins une première valeur de fréquence prédéterminée.

Cette comparaison pourra être effectuée à l'aide d'un calculateur.

Par exemple, si la première fréquence propre est supérieure à la première valeur de fréquence prédéterminée, alors il sera considéré que le blochet est sain, tandis que si la première fréquence propre est inférieure à la première valeur de fréquence prédéterminée, alors il sera considéré que le blochet est endommagé.

Avantageusement, la première valeur de fréquence prédéterminée est obtenue en déterminant les fréquences propres de plusieurs blochets tests dont on a établi le niveau d'endommagement. De préférence, les blochets tests présentent différents niveaux endommagement.

Selon un mode de réalisation avantageux, pour déterminer le niveau d'endommagement, on compare la première valeur de fréquence prédéterminée à une pluralité de valeurs de fréquences prédéterminées. Autrement dit, on place la première fréquence propre sur une échelle de valeurs de fréquence qui ont été préalablement déterminées à partir des fréquences propres des blochets tests précités.

Un intérêt est d'affiner la caractérisation du niveau d'endommagement.

Par exemple, dans le cas où l'on choisit deux valeurs de fréquence prédéterminées, si la première fréquence propre est inférieure à la valeur de fréquence prédéterminée minimale, alors on considère que le blochet est cassé. Si la première fréquence propre est supérieure à la valeur de fréquence prédéterminée maximale, alors on considère que le blochet est sain. Si la première fréquence propre est entre les valeurs de fréquence prédéterminées maximale et minimale, alors on considère que le blochet est fissuré.

Pour affiner encore la qualification de l'endommagement, on pourra utiliser un nombre supérieur de valeurs de fréquences prédéterminées obtenues à partir des premières fréquences propres des blochets tests.

A titre d'exemple non limitatif, pour cinq valeurs de fréquences prédéterminées, on peut établir les niveaux suivants :
- Niveau 0 : blochet sain ;
- Niveau 1 : présence de fissures mineures ;
- Niveau 2 : présence de fissures majeures ;
- Niveau 3 : présence de fissures et ruptures de renforts ;
- Niveau 4 : blochet cassé.

Il a par ailleurs été constaté que la détermination de la première fréquence propre du premier mode propre permet de déceler les fissures verticales.

Selon l'invention, on détermine en outre au moins une deuxième fréquence propre d'un deuxième mode propre du blochet, et on détecte un premier type d'endommagement du blochet à partir des première et deuxième fréquences propres.

Le premier type d'endommagement permet de mieux caractériser le niveau d'endommagement, en déterminant si le blochet a subi ou pas un type particulier d'endommagement, comme par exemple un délaminage ou une fissuration horizontale.

Selon l'invention, pour déterminer le premier type d'endommagement du blochet, on détermine une valeur à partir des première et deuxième fréquences propres, et on compare ladite valeur à au moins un premier coefficient prédéterminé.

Pour déterminer le premier type d'endommagement du blochet, on compare le ratio entre les deuxième et première fréquences propres audit premier coefficient prédéterminé.

Ce premier coefficient pourra être préalablement déterminé à partir de l'analyse des blochets tests précités dont on a préalablement caractérisé l'éventuelle présence d'un premier type d'endommagement.

Il a été constaté par les inventeurs qu'un ratio dont la valeur est supérieure au premier coefficient prédéterminé caractérise la présence d'un délaminage ou d'une fissuration horizontale du béton. Pour les blochets tests, il a été constaté qu'un ratio supérieur à un premier coefficient prédéterminé compris entre 0,5 et 1,5 permet de caractériser la présence d'un délaminage ou d'une fissuration prédéterminée.

Avantageusement, on détermine en outre au moins un premier coefficient d'amortissement relatif au premier mode propre du blochet à partir de la réponse vibratoire mesurée, et on détermine un deuxième type d'endommagement à partir du premier coefficient d'amortissement.

Un intérêt est d'affiner encore la caractérisation de l'endommagement du blochet.

Avantageusement, on compare le premier coefficient d'amortissement à une valeur de référence prédéterminée.

De préférence, cette valeur de référence est également préalablement déterminée à partir de blochets tests. Il a été constaté par les inventeurs qu'un premier coefficient d'amortissement supérieur à une valeur de référence prédéterminée permet de caractériser qu'au moins un morceau de blochet a été détaché. L'analyse des blochets tests précités a permis de constater qu'un premier coefficient d'amortissement supérieur à une valeur de référence comprise entre 2% et 4% permet de caractériser qu'au moins un morceau de blochet a été détaché.

Lorsque le rail est disposé sur le blochet, la position du rail sur le blochet délimite, sur la face supérieure du blochet, une première et une seconde surfaces qui sont situées de part et d'autre du rail.

Avantageusement, on excite le blochet en agissant sur la première surface et on mesure la réponse vibratoire sur la seconde surface.

Avantageusement, l'excitation du blochet est réalisée dans une zone d'excitation située en une première partie d'extrémité du blochet, tandis que la mesure de réponse vibratoire est réalisée dans une zone de mesure située en une seconde partie d'extrémité du blochet qui est opposée à la première partie d'extrémité.

Avantageusement, on excite le blochet en réalisant un impact ou percussion sur ledit blochet. Cet impact est par exemple réalisé en faisant tomber un objet, telle qu'une bille en acier par exemple, sur la face supérieure du blochet. De préférence, l'énergie d'impact est comprise entre 0.05 et 1.5 J.

Selon un mode de réalisation avantageux, le blochet est un blochet en béton, de préférence en béton armé.

L'invention porte également sur l'utilisation du procédé de détection selon l'invention pour déterminer au moins un niveau d'endommagement d'un blochet sur lequel est posé un rail d'une voie ferrée, de préférence non-ballastée.

L'invention porte par ailleurs sur une installation de détection de l'endommagement d'un premier blochet fixé à un premier rail d'une voie ferrée selon la revendication 7, mettant en oeuvre le procédé de détection selon l'invention, ladite installation de détection comportant :
- au moins un premier dispositif d'excitation pour exciter au moins le premier blochet ;
- au moins un premier dispositif de mesure pour mesurer la réponse vibratoire du premier blochet ;
- au moins un dispositif de calcul pour déterminer au moins la première fréquence propre d'un premier mode propre du premier blochet à partir de la réponse vibratoire mesurée du premier blochet, et déterminer un niveau d'endommagement du premier blochet.

Le dispositif de calcul est par exemple un ordinateur, qui est relié au premier dispositif de mesure par une liaison filaire ou sans fil, l'ordinateur pouvant être relié au dispositif de mesure par l'intermédiaire du réseau internet ou tout autre réseau informatique.

De préférence, le premier dispositif d'excitation comprend un impacteur. De même, le deuxième dispositif d'excitation comprend un impacteur.

De préférence, le premier dispositif de mesure comprend au moins un capteur laser, de préférence un vibromètre laser, ou tout autre moyen de mesure de vibration. De même, le deuxième dispositif de mesure comprend de préférence un vibromètre laser.

L'invention porte enfin sur un chariot de détection pour la détection de l'endommagement d'un support de rail fixé à un premier rail d'une voie ferrée, le chariot de détection comportant :
- au moins un premier dispositif d'excitation pour mettre en vibration le premier support de rail ; et
- au moins un premier dispositif de mesure pour mesurer la réponse vibratoire du premier support de rail.

Avantageusement, le chariot de détection comporte en outre :
- un deuxième dispositif d'excitation pour exciter au moins un deuxième blochet fixé à un second rail de la voie ferrée ;
- au moins un second dispositif de mesure pour mesurer la réponse vibratoire du deuxième blochet.

Le chariot est monté sur roues et, selon une variante, est mobile le long de la voie ferrée en roulant sur la dalle de béton.

Selon un mode de réalisation préférentiel, le chariot de détection est un chariot ferroviaire comportant :
- au moins une première roue ayant un axe et configurée pour coopérer avec le premier rail ;
- au moins un premier dispositif d'excitation pour mettre en vibration le premier blochet ;
- au moins un premier dispositif de mesure pour mesurer la réponse vibratoire du premier blochet ;
- le premier dispositif d'excitation et le premier dispositif de mesure étant disposés de part et d'autre d'un plan orthogonal à l'axe et passant par la première roue.

Grâce à cette configuration, l'excitation du premier blochet et la mesure de la réponse vibratoire peuvent être réalisées en des portions d'extrémité opposées du premier blochet.

Un intérêt est de pouvoir obtenir, par une seule excitation, au moins les première et deuxième fréquences propres des premiers et deuxième modes propres, ainsi qu'au moins le premier coefficient d'amortissement du premier mode propre.

Avantageusement, le chariot comporte en outre :
- un moteur pour entraîner en rotation au moins la première roue ; et
- un dispositif de positionnement configuré pour commander le moteur afin de positionner le chariot ferroviaire par rapport au premier blochet.

Un intérêt est de pouvoir automatiser les opérations de détection d'endommagement, le chariot parcourant la voie ferrée de façon autonome en se positionnant seul par rapport à chaque blochet à inspecter.

Par exemple, le dispositif de positionnement comporte un capteur de position configuré pour repérer un des éléments constitutifs du système de fixation, tel que par exemple un écrou. Le positionnement du chariot se fait donc par rapport à cet élément.

### Brève description des dessins

L'invention sera mieux comprise à la lecture de la description qui suit de modes de réalisation de l'invention donnés à titre d'exemples non limitatifs, en référence aux dessins annexés, sur lesquels :
- la figure **1** illustre une voie ferrée non-ballastée munie de blochets ;
- la figure **2** schématise une installation de détection selon l'invention mettant en oeuvre le procédé de détection selon l'invention ;
- la figure **3** est vue de dessus d'un blochet dans laquelle les zones d'excitation et de mesure de réponse vibratoire sont représentées ; et
- la figure **4** illustre un exemple de réalisation d'un chariot de détection conforme à l'invention.

### Description détaillée de l'invention

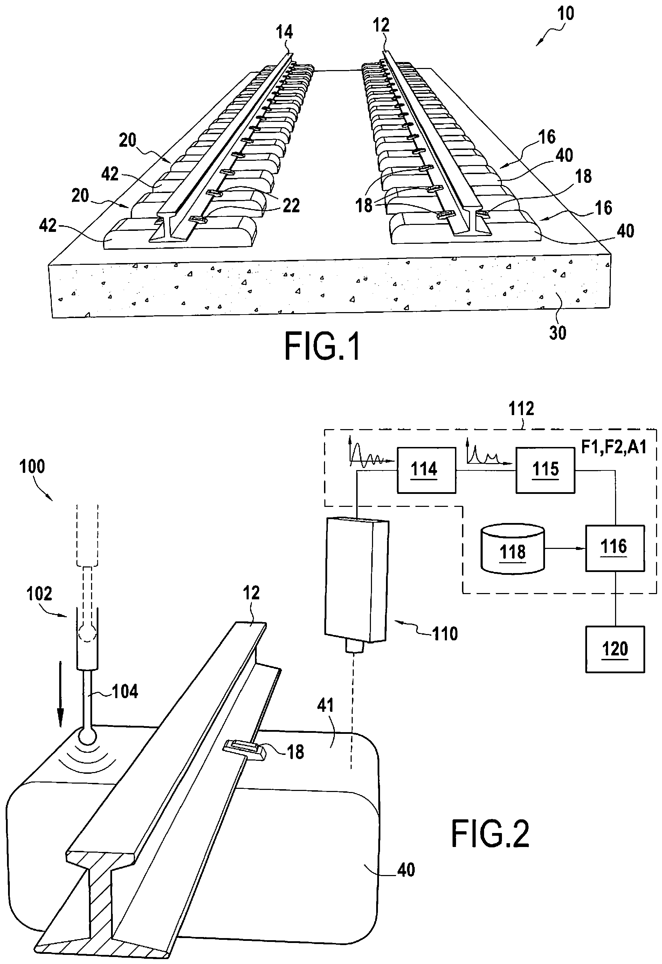

Sur la figure **1**, on a représenté une portion de voie d'une voie ferrée **10** qui comporte un premier rail **12** et un second rail **14** parallèles et distants l'un de l'autre. Dans cet exemple, la portion de voie est rectiligne. L'invention s'applique bien entendu dans d'autres types de portions de voies, telles que les voies courbes, les aiguillages, ou tout autre type de portion de voie.

Le premier rail **12** est fixé à des premiers systèmes de fixation **16** par l'intermédiaire d'organes de fixation **18**, tandis que le second rail **14** est fixé à des deuxièmes systèmes de fixation **20** par l'intermédiaire d'organes de fixation **22.**

Chacun des premiers et deuxièmes systèmes de fixation **16**,**20** est encastré dans une dalle de béton non-armée **30** qui porte la voie ferrée **10.**

Comme on le constate à l'aide de la figure **1**, les premiers systèmes de fixation **16** sont distants les uns des autres selon la direction longitudinale du premier rail **12.** De même, les deuxièmes systèmes de fixation **20** sont distants les uns des autres dans le sens longitudinal du second rail **14.**

On constate également que les premiers systèmes de fixation **16** sont distants des deuxièmes systèmes de fixation **20** selon une direction transversale à la direction longitudinale du premier rail **12.**

En d'autres termes, les premiers systèmes de fixation sont indépendants des deuxièmes systèmes de fixation. Selon une variante, les premiers et deuxième systèmes de fixation pourrait être reliés entre eux par une entretoise métallique, de façon à former une traverse bi-bloc.

On va maintenant décrire l'un des premiers systèmes de fixation **16.** De façon connue par ailleurs, le système de fixation **16**, par exemple du type LVT (marque déposée), comporte :
- un premier blochet en béton **40**,
- une semelle sous rail (non illustrée) disposée entre le premier blochet **40** et le rail,
- une semelle élastique sous blochet (non illustrée) disposée sous le premier blochet **40** et
- un chausson en caoutchouc (non illustré) dans lequel reposent le premier blochet en béton et la semelle élastique.

La semelle élastique est destinée à répartir les charges et à réduire les influences des basses fréquences. La semelle sous rail protège quant à elle le système de fixation des influences des hautes fréquences.

Le chausson élastique est inséré dans la dalle en béton **30.**

De façon connue, la conception du chausson en caoutchouc empêche tout contact entre le premier blochet **40** et la dalle en béton **30.** De plus, la semelle sous blochet permet d'obtenir une raideur du système très faible sous charge dynamique.

Le premier blochet **40** est un bloc en béton armé qui reprend à lui seul presque toute la totalité du poids du système de fixation. Cette structure est conçue pour pouvoir supporter à la fois la charge verticale (compression) et la charge horizontale (cisaillement) grâce à l'insertion du premier blochet **40** dans la dalle **30.**

A titre d'exemple, les caractéristiques des premiers blochets peuvent être les suivantes :
- longueur de la surface d'appui (L) : 640 mm ;
- largeur de la surface d'appui (I) : 264 mm ;
- épaisseur sous rail : 200 mm.

La semelle sous blochet est préférentiellement réalisée en éthylène acétate de vinyle, tandis que le chausson en caoutchouc est préférentiellement constitué de caoutchouc butadiène - styrène (SBR).

Dans cet exemple, les premier et second rails **12**,**14** sont des rails de type « Vignole », connu par ailleurs.

Dans cet exemple, les deuxièmes systèmes de fixation **20** sont identiques aux premiers systèmes de fixation **16.** Les deuxièmes systèmes de fixation **20** comprennent donc des deuxièmes blochets **42** qui sont identiques aux premiers blochets **40.**

Dans l'exemple de la figure **1**, la voie ferrée **10** est dépourvue de ballast. Toutefois, la présente invention peut être mise en oeuvre dans une voie ballastée.

En figure **2**, on a schématisé une installation **100** de détection de l'endommagement du premier blochet **40** fixé au premier rail **12** de la voie ferrée **10.** Dans cet exemple, ladite installation **100** permet également de détecter l'endommagement éventuel des deuxièmes blochets **42** illustrés en figure **1****.**

Cette installation **100** met en oeuvre le procédé de détection selon l'invention qui va être décrit ci-après.

L'installation de détection **100** comporte un premier dispositif d'excitation **102** pour exciter le premier blochet **40.** Autrement dit, le premier dispositif d'excitation **102** est configuré pour mettre en vibration le premier blochet **40.**

Dans cet exemple, le dispositif d'excitation **102** comporte une masselotte **104** qui est mobile verticalement de manière à réaliser un impact sur la face supérieure **41** du premier blochet **40.** Par exemple, la masselotte **104** est lâchée depuis une hauteur prédéterminée de façon à percuter verticalement le premier blochet **40.**

Autrement dit, le premier dispositif d'excitation **102** est un impacteur.

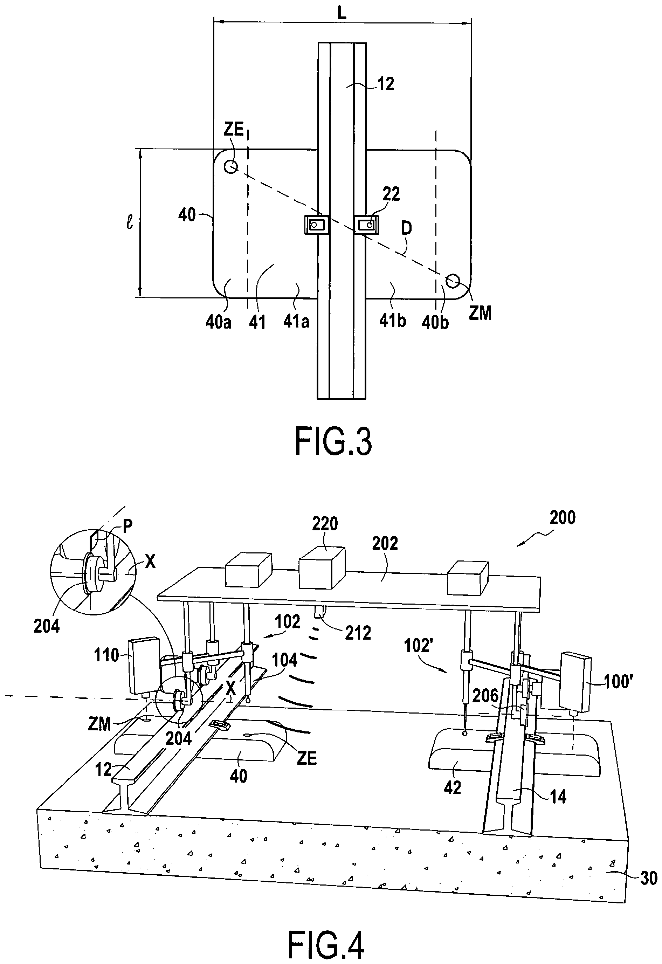

Comme on le constate à l'aide de la figure **3**, dans cet exemple, l'excitation du premier blochet **40** est réalisée dans une zone d'excitation **ZE** qui est située dans une première partie d'extrémité longitudinale **41**a du premier blochet **40.** Plus précisément, la zone d'excitation **ZE** est située dans un coin de la face supérieure **41** du premier blochet **40.** Dans cet exemple, l'impact réalisé par l'impacteur **104** est une percussion dont l'énergie est, dans cet exemple, de l'ordre de 0.1 J.

L'installation **100** comporte par ailleurs au moins un premier dispositif de mesure **110** pour mesurer la réponse vibratoire du premier blochet **40** suite à l'excitation c'est-à-dire la mise en vibration, réalisée par le premier dispositif d'excitation **102.**

Dans cet exemple, le premier dispositif de mesure **110** est un vibromètre qui comporte un capteur laser. La mesure de réponse vibratoire est réalisée dans une zone de mesure **ZM**, illustrée en figure **3**, qui est située en une seconde partie d'extrémité longitudinale **40**b du premier blochet **40.** Comme on le constate sur la figure **3**, cette seconde partie d'extrémité longitudinale **40**b est opposée à la première partie d'extrémité longitudinale **40**a. Dans cet exemple, la zone de mesure **ZM** est située dans un coin de la face supérieure **41** du premier blochet **40**, qui est opposé à la zone d'excitation. Autrement dit, la zone de mesure et la zone d'excitation sont disposées aux extrémités d'une diagonale **D** de la face supérieure **41** du premier blochet **40.**

Selon une autre variante, la zone de mesure et la zone d'excitation peuvent aussi être disposées de façon sensiblement symétrique par rapport au rail.

Le premier rail étant disposé sur le premier blochet, on constate que la position du premier rail **12** sur le premier blochet **40** délimite, sur la face supérieure du blochet, une première surface **41**a et une seconde surface **41**b qui sont situées de part et d'autre du premier rail. Il apparaît donc que la zone d'excitation **ZE** et la zone de mesure **ZM** sont disposées de part et d'autre du premier rail **12.**

L'installation **100** comporte par ailleurs au moins un dispositif de calcul **112**, par exemple un ordinateur, pour déterminer au moins la première fréquence propre **F1** d'un premier mode propre du premier blochet **40** à partir de la réponse vibratoire du premier blochet **40** mesurée par le vibromètre. Pour ce faire, le dispositif de calcul **112** comporte des moyens **114** pour transformer la réponse vibratoire en une fonction de réponse en fréquences (FFR). Le dispositif de calcul **112** comporte en outre des moyens **115** pour détecter la première fréquence propre **F1**, la deuxième fréquence propre **F2** et un premier coefficient d'amortissement **A1** relatif au premier mode propre du premier blochet **40.**

Le dispositif de calcul **112** comporte en outre des moyens **116** pour déterminer au moins un niveau d'endommagement à partir de la première fréquence propre, un premier type d'endommagement et un deuxième type d'endommagement du premier blochet **40** à partir de la première fréquence propre **F1**, de la deuxième fréquence propre **F2**, et du premier coefficient d'amortissement **A1**, et à partir de données préalablement stockées dans une base de données **118.**

Dans cet exemple, l'installation **100** comporte par ailleurs un dispositif **120** pour afficher le niveau d'endommagement, ainsi que les premier et deuxième types d'endommagement du premier blochet **40.**

Selon un aspect avantageux de l'invention, au moins une partie de l'installation **100** est disposée sur un chariot **200** illustré en figure **4****.**

Dans cet exemple, le chariot **200** est un chariot ferroviaire. Sans sortir du cadre de l'invention, le chariot pourrait être un chariot mobile muni de roues enjambant la voie ferrée.

Le chariot ferroviaire **200** illustré en figure **4** comporte un châssis **202** muni d'une paire de premières roues ferroviaires **204** et d'une paire de deuxièmes roues ferroviaires **206.** On comprend que les premières roues ferroviaires **204** sont configurées pour coopérer avec le premier rail **12**, tandis que les deuxièmes roues **206** sont configurées pour coopérer avec le second rail **14.**

On constate par ailleurs que la première roue **204** présente un axe de rotation **X.**

Le chariot **202** comporte par ailleurs les premiers dispositifs d'excitation **102** et le premier dispositif de mesure **110** précédemment décrits.

On constate par ailleurs que le premier dispositif d'excitation **102** et le premier dispositif de mesure **110** sont disposés de part et d'autre d'un plan **P** qui est orthogonal à l'axe **X** et passant par la première roue **204.**

Par ailleurs, le chariot comporte en outre un moteur **210** pour entraîner en rotation au moins la première roue **204.**

Le chariot comporte en outre un dispositif de positionnement **212** qui est configuré pour commander le moteur **210** afin de positionner le chariot **200** par rapport au premier blochet **40.**

En se référant à la figure **4**, on constate que le chariot **200** comporte en outre un deuxième dispositif d'excitation **102**', identique au premier dispositif d'excitation **102** pour exciter au moins un deuxième blochet **42** fixé au second rail **14** de la voie ferrée **10.**

Il comprend en outre un second dispositif de mesure **110**', identique au premier dispositif de mesure **100**, pour mesurer la réponse vibratoire du deuxième blochet **42.**

On comprend donc que le chariot ferroviaire **200** permet de détecter l'endommagement des premiers et deuxièmes blochets **40**,**42**, de manière simultanée, sans nécessiter un déplacement du chariot.

Le chariot ferroviaire **200** comporte en outre un dispositif **220** pour transmettre les réponses vibratoires des premiers et deuxièmes blochets **40,42** au dispositif de calcul **112** précédemment décrit par une liaison sans fil. Selon une variante, le dispositif de calcul **112** est monté sur le chariot **200.**

On va maintenant décrire trois modes de mises en oeuvre du procédé de détection selon l'invention.

De façon commune aux trois modes de mise en oeuvre, le procédé de détection de l'endommagement du blochet comporte les étapes suivantes :
- on excite le blochet, en le faisant vibrer à l'aide du dispositif d'excitation **102** ; puis
- on mesure la réponse vibratoire du blochet à l'aide du dispositif de mesure **110** ;
- on détermine au moins une première fréquence propre **F1** d'un premier mode propre du blochet à partir de la réponse vibratoire mesurée. Pour ce faire, on transforme la réponse vibratoire en fonction de réponse de fréquence, par une technique mathématique connue, par exemple une transformée de Fourier.

Pour déterminer la première fréquence propre **F1**, on commence par filtrer les fréquences inférieures à une valeur seuil, par exemple 200 Hz pour des blochets d'origine ou 300 Hz pour des blochets de remplacement, étant précisé que ce filtrage n'est pas nécessaire si le blochet n'est pas fixé au rail. La première fréquence propre **F1** est la première fréquence propre non filtrée.

On détermine ensuite au moins un niveau d'endommagement du blochet à partir de la première fréquence propre **F1.**

Pour ce faire, on compare la première fréquence propre **F1** avec au moins une première valeur de fréquence prédéterminée.

Dans le premier mode de mise en oeuvre, on compare la première fréquence **F1** avec quatre valeurs de fréquence prédéterminées qui sont stockées dans la base de données **118.**

Comme expliqué ci-dessus, ces valeurs de fréquence peuvent être déterminées en réalisant des mesures de premières fréquences propres sur une série de blochets tests endommagés dont on connaît le niveau d'endommagement. Les valeurs de fréquence prédéterminées indiquées dans le tableau **1** ont été déterminées en analysant environ deux-cent blochets endommagés provenant d'une des voies ferrées du tunnel sous la Manche.

Pour ce faire, on a tout d'abord caractérisé le niveau d'endommagement de chacun des blochet. Puis, chacun des blochets a été excité et on a mesuré sa première fréquence propre. Ensuite, à l'aide d'une analyse statistique, on a identifié quatre valeurs de fréquence permettant de discriminer des niveaux d'endommagement. Les niveaux d'endommagement illustrés au tableau **1** sont au nombre de cinq.

**Tableau 1**

| **Première fréquence propre F1 (Hz)** | **Niveau d'endommagement (fissuration verticale du béton et/ou rupture des renforts d'acier)** |
|---|---|
| > 1 653 Hz | 0 : blochet sain |
| > 1 433 Hz | 1 : fissures mineures |
| > 1037 Hz | 2 : fissures majeures |
| > 555 Hz | 3 : fissures et ruptures de(s) renforts |
| <= 555 Hz | 4 : blochet cassé |

On comprend donc qu'en fonction de la première valeur de la première fréquence propre **F1**, on caractérise le niveau d'endommagement du blochet à analyser.

Selon le deuxième mode de mise en oeuvre du procédé de détection selon l'invention, on détermine en outre au moins une deuxième fréquence propre **F2** d'un deuxième mode propre du blochet. On détermine ensuite un premier type d'endommagement du blochet à partir des premières et deuxièmes fréquences propres.

Pour ce faire, dans cet exemple, pour déterminer le premier type d'endommagement du blochet, on compare le ratio entre les deuxième et première fréquences propres au moins un premier coefficient prédéterminé.

Ce premier coefficient prédéterminé résulte également d'une étude statistique réalisée à partir du lot de blochets tests dont on a caractérisé le premier type d'endommagement.

Dans ce deuxième mode de mise en oeuvre, le premier type d'endommagement caractérise la fissuration horizontale du béton, à savoir la présence ou pas d'un délaminage.

Par exemple, à l'aide du tableau **2**, on comprend que pour le troisième niveau d'endommagement, le premier coefficient prédéterminé est égal à 1.2 et lorsque le ratio deuxième fréquence propre sur première fréquence propre est supérieur à 1.2, cela signifie que le blochet présente une fissuration verticale du béton ainsi qu'une fissuration horizontale se matérialisant par un délaminage.

Par ailleurs, pour le quatrième niveau d'endommagement à savoir le blochet cassé, le deuxième coefficient prédéterminé est, dans cet exemple, égal à 1.25. Lorsque le ratio **F2/F1** est supérieur à 1.25, on caractérise la présence d'une fissuration horizontale.

**Tableau 2**

| **Première fréquence propre F1 (Hz)** | **Ratio F2/F1** | **Niveau d'endommagement (fissuration verticale du béton et/ou rupture des renforts d'acier)** | **Premier type d'endommagement (fissuration horizontale du béton)** |
|---|---|---|---|
| > 1 653 Hz | | 0 : blochet sain | |
| > 1 433 Hz | | 1 : fissures mineures | |
| > 1037 Hz | | 2 : fissures majeures | |
| > 555 Hz | <= 1.2 | 3 : fissures et ruptures de(s) renforts | |
| | > 1.2 | | délaminage |
| <= 555 Hz | <=1.25 | 4 : blochet cassé | |
| | > 1.25 | | délaminage |

On va maintenant décrire un troisième mode de mise en oeuvre du procédé de détection selon l'invention.

Selon ce troisième mode de mise en oeuvre, on détermine en outre au moins un premier coefficient d'amortissement **A1** qui est relatif au premier mode propre du blochet. Comme précisé précédemment, le premier coefficient d'amortissement est déterminé à partir de la réponse vibratoire mesurée.

Ensuite, on détermine un deuxième type d'endommagement, pour le niveau d'endommagement déterminé, à partir du premier coefficient d'amortissement.

Comme illustré dans le tableau **3**, le premier coefficient d'amortissement est égal à 2.5 %. Là encore, il a été déterminé à partir d'une étude statistique réalisée sur la base du lot de blochets tests endommagés précité.

Il a été constaté qu'un coefficient d'amortissement **1** supérieur à 2.5 % caractérise le fait que des morceaux de béton sont détachés du blochet.

On comprend donc que le troisième mode de mise en oeuvre fournit une détection d'endommagement qui est plus précise que les premier et deuxième modes de mise en oeuvre.

**Tableau 3**

| **Première fréquence propre F1 (Hz)** | **Ratio F2/F1** | **A1** | **Niveau d'endommagement (fissuration verticale du béton et/ou rupture des renforts d'acier)** | **Premier type d'endommagement (délaminage)** | **Deuxième type d'endommagement (morceaux de béton détachés)** |
|---|---|---|---|---|---|
| > 1 653 Hz | | | 0 : blochet sain | | |
| > 1 433 Hz | | | 1 : fissures mineures | | |
| > 1 037 Hz | | | 2 : fissures majeures | | |
| > 555 Hz | <= 1.2 | <= 2.5% | 3 : fissures et ruptures de(s) renforts | | |
| | | > 2.5% | | | Morceaux de béton détachés |
| | > 1.2 | <= 2.5% | | délaminage | |
| | | > 2.5% | | | Morceaux de béton détachés |
| <= 555 Hz | <=1.25 | <= 2.5% | 4 : blochet cassé | | |
| | | > 2.5% | | | Morceaux de béton détachés |
| | > 1.25 | <= 2.5% | | délaminage | |
| | | > 2.5% | | | Morceaux de béton détachés |

## Revendications

1. Procédé de détection de l'endommagement d'un blochet d'une voie ferrée, procédé dans lequel :
- on excite le blochet (40,42) ; puis
- on mesure la réponse vibratoire du blochet ;
- on détermine au moins une première fréquence propre (F1) d'un premier mode propre du blochet à partir de la réponse vibratoire mesurée;
- on détermine en outre au moins une deuxième fréquence propre (F2) d'un deuxième mode propre du blochet à partir de la réponse vibratoire mesurée;
- on détermine au moins un niveau d'endommagement du blochet à partir d'au moins ladite première fréquence propre, en comparant la première fréquence propre (F1) avec au moins une première valeur de fréquence prédéterminée;
- on détermine en outre un premier type d'endommagement du blochet à partir des première et deuxième fréquences propres, en comparant le ratio entre les deuxième et première fréquences propres à au moins un premier coefficient prédéterminé.

2. Procédé de détection selon la revendication 1, dans lequel on détermine en outre au moins un premier coefficient d'amortissement (A1) relatif au premier mode propre du blochet à partir de la réponse vibratoire mesurée, et on détermine un deuxième type d'endommagement à partir du premier coefficient d'amortissement permettant de caractériser qu'un morceau du blochet a été détaché.

3. Procédé de détection selon l'une quelconque des revendications précédentes, dans lequel l'excitation du blochet (40) est réalisée dans une zone d'excitation (ZE) située en une première partie d'extrémité longitudinale (40a) du blochet (40), tandis que la mesure de réponse vibratoire est réalisée dans une zone de mesure (ZM) située en une seconde partie d'extrémité longitudinale (40b) du blochet (40) qui est opposée à la première partie d'extrémité longitudinale (40a).

4. Procédé de détection selon l'une quelconque des revendications précédentes, dans lequel on excite le blochet (40,42) en réalisant un impact sur ledit blochet.

5. Procédé de détection selon l'une quelconque des revendications précédentes, dans lequel le blochet (40,42) est en béton armé.

6. Procédé de détection selon l'une quelconque des revendications précédentes pour déterminer au moins le niveau d'endommagement et le premier type d'endommagement d'au moins un blochet (40,42) sur lequel est disposé un rail d'une voie ferrée (10).

7. Installation (100) de détection de l'endommagement d'au moins un premier blochet (40) fixé à un premier rail (12) d'une voie ferrée (10), pour la mise en oeuvre du procédé de détection selon l'une quelconque des revendications 1 à 5, ladite installation (100) comportant :
- au moins un premier dispositif d'excitation (102) pour exciter au moins le premier blochet (40) ;
- au moins un premier dispositif de mesure (110) pour mesurer la réponse vibratoire du premier blochet (40) ;
- au moins un dispositif de calcul (112) configuré pour déterminer, à partir de la réponse vibratoire mesurée du premier blochet au moins la première fréquence propre (F1) d'un premier mode propre du premier blochet (40) ainsi que la deuxième fréquence propre d'un deuxième mode propre dudit blochet, le dispositif de calcul étant en outre configuré pour :
déterminer un niveau d'endommagement du premier blochet à partir de la première fréquence propre, en comparant la première fréquence propre (F1) avec au moins une première valeur de fréquence prédéterminée ; et pour
déterminer un premier type d'endommagement du blochet à partir des première et deuxième fréquences propres, en comparant le ratio entre les deuxième et première fréquences propres à au moins un premier coefficient prédéterminé.

8. Installation de détection selon la revendication 7, **caractérisée en ce que** le premier dispositif d'excitation (102) comprend au moins un impacteur (104).

9. Installation de détection selon la revendication 7 ou 8, **caractérisée en ce que** le premier dispositif de mesure (110) comprend au moins un capteur laser.

10. Chariot (200) de détection pour la détection de l'endommagement d'un premier blochet fixé à un premier rail (12) d'une voie ferrée (10) pour la mise en oeuvre du procédé selon l'une quelconque des revendications 1 à 5, le chariot comportant :
- au moins un premier dispositif d'excitation (102) pour mettre en vibration le premier blochet ;
- au moins un premier dispositif de mesure (110) pour mesurer la réponse vibratoire du premier blochet :
- au moins une première roue (204) ayant un axe (X) et configurée pour coopérer avec le premier rail (12) ;
le premier dispositif d'excitation (102) et le premier dispositif de mesure (110) étant disposés de part et d'autre d'un plan (P) orthogonal à l'axe (X) et passant par la première roue (204).

11. Chariot (200) de détection selon la revendication 10, **caractérisé en ce qu'**il comporte:
- un deuxième dispositif d'excitation (102) pour exciter au moins un deuxième blochet (42) fixé à un second rail (14) de la voie ferrée (10) ;
- au moins un second dispositif de mesure (110') pour mesurer la réponse vibratoire du deuxième blochet (42).

12. Chariot selon la revendication 10 ou 11, **caractérisé en ce qu'**il comporte en outre :
- un moteur (210) pour entraîner en rotation au moins la première roue (204) ; et
un dispositif de positionnement (212) configuré pour commander le moteur (210) afin de positionner le chariot (200) par rapport au premier blochet (40).

## Patentansprüche

1. Verfahren zur Erkennung einer Beschädigung an einem Block eines Eisenbahngleises, wobei in dem Verfahren:
- der Block (40, 42) angeregt wird, dann
- die Schwingungsreaktion des Blocks gemessen wird,
- mindestens eine erste Eigenfrequenz (F1) einer ersten Eigenform des Blocks anhand der gemessenen Schwingungsreaktion bestimmt wird,
- ferner mindestens eine zweite Eigenfrequenz (F2) einer zweiten Eigenform des Blocks anhand der gemessenen Schwingungsreaktion bestimmt wird,
- mindestens ein Grad an Beschädigung an dem Block anhand mindestens der ersten Eigenfrequenz bestimmt wird, indem die erste Eigenfrequenz (F1) mit mindestens einem ersten vorbestimmten Frequenzwert verglichen wird,
- ferner eine erste Art von Beschädigung an dem Block anhand der ersten und der zweiten Eigenfrequenz bestimmt wird, indem das Verhältnis zwischen der zweiten und der ersten Eigenfrequenz mit mindestens einem ersten vorbestimmten Koeffizienten verglichen wird.

2. Erkennungsverfahren nach Anspruch 1, wobei ferner mindestens ein erster Dämpfungskoeffizient (A1) in Bezug auf die erste Eigenform des Blocks anhand der gemessenen Schwingungsreaktion bestimmt wird und eine zweite Art von Beschädigung anhand des ersten Dämpfungskoeffizienten bestimmt wird, wodurch ermöglicht wird, zu kennzeichnen, dass sich ein Stück des Blocks gelöst hat.

3. Erkennungsverfahren nach einem der vorhergehenden Ansprüche, wobei die Anregung des Blocks (40) in einer Anregungszone (ZE) realisiert wird, die sich in einem ersten Längsendabschnitt (40a) des Blocks (40) befindet, während die Messung der Schwingungsreaktion in einer Messzone (ZM) realisiert wird, die sich in einem zweiten Längsendabschnitt (40b) des Blocks (40) befindet, der dem ersten Längsendabschnitt (40a) gegenüberliegt.

4. Erkennungsverfahren nach einem der vorhergehenden Ansprüche, wobei der Block (40, 42) angeregt wird, indem ein Aufprall auf den Block realisiert wird.

5. Erkennungsverfahren nach einem der vorhergehenden Ansprüche, wobei der Block (40, 42) aus Stahlbeton ist.

6. Erkennungsverfahren nach einem der vorhergehenden Ansprüche zum Bestimmen von mindestens dem Grad an Beschädigung und der ersten Art von Beschädigung an mindestens einem Block (40, 42), auf dem eine Schiene eines Eisenbahngleises (10) angeordnet ist.

7. Anlage (100) zur Erkennung einer Beschädigung an mindestens einem ersten Block (40), der an einer ersten Schiene (12) eines Eisenbahngleises (10) befestigt ist, für die Umsetzung des Erkennungsverfahrens nach einem der Ansprüche 1 bis 5, wobei die Anlage (100) beinhaltet:
- mindestens eine erste Anregungsvorrichtung (102), um zumindest den ersten Block (40) anzuregen,
- mindestens eine erste Messvorrichtung (110), um die Schwingungsreaktion des ersten Blocks (40) zu messen,
- mindestens eine Berechnungsvorrichtung (112), die dazu ausgestaltet ist, anhand der gemessenen Schwingungsreaktion des ersten Blocks mindestens die erste Eigenfrequenz (F1) einer ersten Eigenform des ersten Blocks (40) sowie die zweite Eigenfrequenz einer zweiten Eigenform des Blocks zu bestimmen, wobei die Berechnungsvorrichtung ferner ausgestaltet ist zum:
Bestimmen eines Grads an Beschädigung an dem ersten Block anhand der ersten Eigenfrequenz, indem die erste Eigenfrequenz (F1) mit mindestens einem ersten vorbestimmten Frequenzwert verglichen wird, und zum
Bestimmen einer ersten Art von Beschädigung an dem Block anhand der ersten und der zweiten Eigenfrequenz, indem das Verhältnis zwischen der zweiten und der ersten Eigenfrequenz mit mindestens einem ersten vorbestimmten Koeffizienten verglichen wird.

8. Erkennungsanlage nach Anspruch 7, **dadurch gekennzeichnet, dass** die erste Anregungsvorrichtung (102) mindestens einen Stoßkörper (104) umfasst.

9. Erkennungsanlage nach Anspruch 7 oder 8, **dadurch gekennzeichnet, dass** die erste Messvorrichtung (110) mindestens einen Lasersensor umfasst.

10. Erkennungswagen (200) zum Erkennen einer Beschädigung an einem ersten Block, der an einer ersten Schiene (12) eines Eisenbahngleises (10) befestigt ist, für die Umsetzung des Verfahrens nach einem der Ansprüche 1 bis 5, wobei der Wagen beinhaltet:
- mindestens eine erste Anregungsvorrichtung (102), um den ersten Block in Schwingung zu versetzen,
- mindestens eine erste Messvorrichtung (110), um die Schwingungsreaktion des ersten Blocks zu messen,
- mindestens ein erstes Rad (204), das eine Achse (X) aufweist und dazu ausgestaltet ist, mit der ersten Schiene (12) zusammenzuwirken,
wobei die erste Anregungsvorrichtung (102) und die erste Messvorrichtung (110) auf beiden Seiten einer Ebene (P) angeordnet sind, die orthogonal zu der Achse (X) ist und durch das erste Rad (204) verläuft.

11. Erkennungswagen (200) nach Anspruch 10, **dadurch gekennzeichnet, dass** er beinhaltet:
- eine zweite Anregungsvorrichtung (102), um mindestens einen zweiten Block (42) anzuregen, der an einer zweiten Schiene (14) des Eisenbahngleises (10) befestigt ist,
- mindestens eine zweite Messvorrichtung (110'), um die Schwingungsreaktion des zweiten Blocks (42) zu messen.

12. Wagen nach Anspruch 10 oder 11, **dadurch gekennzeichnet, dass** er ferner beinhaltet:
- einen Motor (210), um mindestens das erste Rad (204) in Drehung zu versetzen, und
eine Positionierungsvorrichtung (212), die dazu ausgestaltet ist, den Motor (210) zu steuern, um den Wagen (200) in Bezug auf den ersten Block (40) zu positionieren.

## Claims

1. A detection method for detecting damage in a railway track supporting block, said detection method comprising:
- exciting the supporting block (40, 42); then
- measuring the vibratory response of the supporting block;
- determining at least a first natural frequency (FI) of a first natural mode of the supporting block from the measured vibratory response;
- also determining at least a second natural frequency (F2) of a second natural mode of the supporting block from the measured vibratory response;
- determining at least a damage level of the supporting block at least from said first natural frequency, by comparing the first natural frequency (F1) with at least one value for the first predetermined frequency; and
- also determining a first type of damage in the supporting block from the first and second natural frequencies, by comparing a ratio between the second and first natural frequencies with a first predetermined coefficient.

2. The detection method according to claim 1, wherein at least one first damping coefficient (Al) is also determined relating to the first natural mode of the supporting block from the measured vibratory response, and a second type of damage is determined from the first damping coefficient, which makes it possible to characterize that a piece of the supporting block has been detached.

3. The detection method according to any one of preceding claims, wherein the supporting block (40) is excited in an excitation zone (ZE) situated at a first longitudinal end portion (40a) of the supporting block (40), while the vibratory response is measured in a measurement zone (ZM) situated at a second longitudinal end portion (40b) of the supporting block (40) that is opposite from the first longitudinal end portion (40a).

4. The detection method according to any one of preceding claims, wherein the supporting block (40, 42) is excited by making an impact on said supporting block.

5. The detection method according to any one of preceding claims, wherein the supporting block (40, 42) is made of reinforced concrete.

6. The detection method according to any one of preceding claims for determining at least a level of damage of at least one supporting block (40, 42) having a rail of a railway track (10) arranged thereon.

7. A detection installation (100) for detecting damage in at least a first supporting block (40) fastened to a first rail (12) of a railway track (10), for performing the detection method according to any one of claims 1 to 5, said installation (100) comprising:
- at least a first excitation device (102) for exciting at least the first supporting block (40);
- at least a first measurement device (110) for measuring the vibratory response of the first supporting block (40);
- at least one calculation device (112) configured to determine, from the measured vibratory response of the first supporting block, at least the first natural frequency (FI) of a first natural mode of the first supporting block (40) and also the second natural frequency of a second natural mode of said supporting block, the calculation device also being configured to:
- determine a damage level of the first supporting block from the first natural frequency, by comparing the first natural frequency (F1) with at least one value for the first predetermined frequency; and
- determine a first type of damage in the supporting block from the first and second natural frequencies, by comparing a ratio between the second and first natural frequencies with a first predetermined coefficient..

8. The detection installation according to claim 7, **characterized in that** the first excitation device (102) comprises at least one impactor (104).

9. The detection installation according to claim 8, **characterized in that** the first measurement device (110) comprises at least a laser sensor.

10. A detection trolley (200) for detecting damage in a first supporting block fastened to a first rail (12) of a railway track (10) for performing the method according to any one of claims 1 to 5, said detection trolley comprising:
- at least a first excitation device (102) for setting the first supporting block into vibration;
- at least a first measurement device (110) for measuring the vibratory response of the first supporting block; and
- at least a first wheel (204) having an axis (X) and configured to co-operate with the first rail (12);
the first excitation device (102) and the first measurement device (110) being arranged on either side of a plane (P) orthogonal to the axis (X) and containing the first wheel (204).

11. The detection trolley (200) according to claim 10, **characterized in that** it comprises:
- a second excitation device (102) for exciting at least one second supporting block (42) fastened to a second rail (14) of the railway track (10); and
- at least one second measurement device (110') for 10 measuring the vibratory response of the second supporting block (42).

12. The trolley according to claim 10 or 11, **characterized in that** it further comprises:
- a motor (210) for driving at least a first wheel (204) in rotation; and
- a positioning device (212) configured for controlling the motor (210) so as to position the trolley (200) relative to the first supporting block (40).
